Europäisches Patentamt

European Patent Office

Office européen des brevets

(11) Veröffentlichungsnummer : **0 411 565 B1**

## (12) EUROPÄISCHE PATENTSCHRIFT

(45) Veröffentlichungstag der Patentschrift :
**25.10.95 Patentblatt 95/43**

(51) Int. Cl.$^6$ : **G01C 19/38**

(21) Anmeldenummer : **90114676.1**

(22) Anmeldetag : **31.07.90**

(54) **Autonom ausrichtbare Kreiselanordnung mit zweiachsiger Plattform.**

(30) Priorität : **31.07.89 DE 3925311**

(43) Veröffentlichungstag der Anmeldung :
**06.02.91 Patentblatt 91/06**

(45) Bekanntmachung des Hinweises auf die
Patenterteilung :
**25.10.95 Patentblatt 95/43**

(84) Benannte Vertragsstaaten :
**DE FR GB IT NL SE**

(56) Entgegenhaltungen :
**EP-B- 0 048 212**
**DE-C- 3 019 372**
**DE-C- 3 141 342**
**DE-C- 3 233 612**
**"Applied Optimal Control" von Arthur E. Bryson, Jr. und Yu-Chi Ho, Hemisphere Publishing Company, 1975**

(73) Patentinhaber : **Bodenseewerk Gerätetechnik GmbH**
**Alte Nussdorfer Strasse 15**
**Postfach 1120**
**D-88662 Überlingen (DE)**

(72) Erfinder : **Krogmann, Uwe**
**Zur Asche 24**
**D-7770 Überlingen-Nussdorf (DE)**

(74) Vertreter : **Wolgast, Rudolf, Dipl.-Chem. Dr. et al**
**Dipl.-Phys. Jürgen Weisse**
**Dipl.-Chem. Dr. Rudolf Wolgast**
**Bökenbusch 41**
**Postfach 11 03 86**
**D-42531 Velbert (DE)**

## Beschreibung

Technisches Gebiet

Die Erfindung betrifft eine autonom ausrichtbare Kreiselanordnung, enthaltend
- eine zweiachsige Plattform mit einem stabilisierten Element, die durch Stellmotoren um zwei Plattformachsen ausrichtbar ist,
- einen zweiachsigen Kreisel mit je einem Abgriff und einem Drehmomenterzeuger auf jeder Eingangsachse,
- bei der die Stellmotoren von den Signalen der Abgriffe gesteuert sind, und
- bei der an dem stabilisierenden Element Neigungsgeber vorgesehen sind, aus deren Signalen Stellsignale abgeleitet werden, welche auf die Drehmomenterzeuger des Kreisels aufgeschaltet sind.

Zugrundeliegender Stand der Technik

Die EP-B1-0 048 212 beschreibt ein Kurs-Lage-Referenzgerät. Das Kurs-Lage-Referenzgerät enthält einen zweiachsigen, elektrisch gefesselten Kreisel. Der Kreisel hat eine Drallachse und zwei zueinander und zu der Drallachse senkrechte Eingangsachsen. Auf jeder der Eingangsachsen sitzen ein Abgriff und ein Drehmomenterzeuger. Der Kreisel ist in dem stabilisierten Element einer zweiachsigen Plattform angeordnet. Die Plattform enthält einen Azimutrahmen, der durch einen Stellmotor um eine im wesentlichen vertikale Azimutachse gegenüber einem Gehäuse verdrehbar ist. In dem Azimutrahmen ist ein Innenrahmen um eine zu der Azimutachse senkrechte, im wesentlichen horizontale zweite Rahmenachse ebenfalls durch einen Stellmotor verdrehbar. Das an dem Innenrahmen sitzende stabilisierte Element enthält außer dem Kreisel zwei Beschleunigungsmesser. Die Empfindlichkeitsachsen der beiden Beschleunigungsmesser sind zueinander senkrecht. Die Empfindlichkeitsachse des ersten Beschleunigungsmessers ist parallel zu der im wesentlichen waagerechten Drallachse des Kreisels. Die Empfindlichkeitsachse des zweiten Beschleunigungsmessers ist parallel zu der einen, im wesentlichen ebenfalls waagerechten Eingangsachse des Kreisels. Das Ausgangssignal des ersten Beschleunigungsmessers ist über Verstärkernetzwerke mit geeigneter, fester Übertragungsfunktion auf die Drehmomenterzeuger des zweiachsigen, elektrisch gefesselten Kreisels geschaltet. Der zweite Beschleunigungsmesser erzeugt Korrektursignale zur Kompensation des Einflusses der Vertikalkomponente der Erddrehung. Die Abgriffe des Kreisels sind über Verstärker auf die Stellmotore der Plattform geschaltet. Bei dieser Anordnung wird die Drallachse des Kreisels horizontal gehalten und infolge der Horizontalkomponente der Erddrehung nach Nord ausgerichtet.

Die bekannte Anordnung ist anfällig gegen äußere Störungen. Sucht man diese Störungen durch ein entsprechendes Zeitverhalten der Verstärkernetzwerke zu unterdrücken, wird die Einstellzeit unerwünscht lang.

Durch die DE-C2-31 41 342 ist ein Kurs-Lage-Referenzgerät bekannt, bei welchem eine zweiachsige Plattform benutzt wird. Dabei wird der Azimutwinkel durch Integration eines Wendekreiselsignales erhalten. Außerdem ist eine Kompensation des Einflusses der Erddrehung vorgesehen. Zur Stützung des Kreisels werden bei einem im Mittel stillstehender Träger aus Beschleunigungsmessersignalen Geschwindigkeitssignale abgeleitet. Diese werden in das System einer im Azimut nach Nord eingedreht gedachten "virtuellen" Plattform transformiert und bilden Regelabweichungssignale. Aus diesen Regelabweichungssignalen werden wiederum Korrektursignale gebildet. Die Korrektursignale werden rücktransformiert und auf die Drehmomenterzeuger der zweiachsigen Plattform bzw. einen Integrator für das Wendekreiselsignal geschaltet.

Durch die DE-B-29 03 282 ist es bekannt, Kreiselfehler dadurch zu eliminieren, daß der Kreisel um seine Drallachse in verschiedene Winkelstellungen verdreht wird und die Differenzen der Meßsignale gebildet werden. Bei dieser Anordnung ist die Drallachse vertikal angeordnet. Die Nordrichtung wird aus dem Verhältnis der Signale zweier um 90° gegeneinander versetzter Eingangsachsen bestimmt, um welche Komponenten der Horizontalkomponente der Erddrehung wirksam sind.

Ähnliche Anordnungen zeigen die DE-C2-31 43 527, DE-B-29 10 282 und die DE-C2-32 27 568. Die DE-C3-30 28 649 beschreibt eine Vorrichtung zur Bestimmung der Nordrichtung, bei welcher ein elektrisch gefesselter, zweiachsiger Kreisel mit horizontaler Drallachse und einer ebenfalls horizontalen Eingangsachse auf einen Azimutrahmen um eine vertikale Azimutachse in verschiedene Winkelstellungen verdrehbar ist. Auf dem Azimutrahmen sind zwei Beschleunigungsmesser mit zueinander senkrechten, horizontalen Empfindlichkeitsachsen angeordnet. In einem Speicher sind Fehlerparameter gespeichert. Kurs- und Lagesignale werden durch Kombination der Kreisel- und Beschleunigungsmessersignale und der Fehlerparameter gebildet.

Eine ähnliche Anordnung beschreibt die DE-C2-30 50 615. Eine weitere Anordnung mit horizontaler Drallachse und Messung in verschiedenen Stellungen beschreibt die DE-C2-30 19 372.

Die DE-C2-30 45 823 betrifft ein Verfahren zur Bestimmung der Nordrichtung, bei welcher, ähnlich wie bei der vorerwähnten DE-C3-30 28 649 zur Ermittlung der Nordrichtung mindestens drei Messungen einer von der Eingangswinkelgeschwindigkeit abhängigen Ausgangsgröße in verschiedenen, gegenüber der Nullstellung um definierte Winkel verdrehten Stellungen des Pendelkörpers vorgenommen werden und daraus die Nordrichtung errechnet wird.

Die DE-C2-32 33 612 betrifft ein Gerät zur Bestimmung der Nordrichtung mit einer zweiachsigen Plattform und einem zweiachsigen Kreisel. Die Plattform entkoppelt den Kreisel von einem Träger um zwei waagerechte Plattformachsen. Die Drallachse des Kreisels ist vertikal. Zwei Beschleunigungsmesser horizontieren die Plattform über den Kreisel. Bei einer Ausführung der DE-C2-32 33 612 ist der Kreisel ein elektrisch gefesselter Kreisel. Durch Integration der Kreiselsignale werden Lagewinkel einer "virtuellen" Plattform erhalten. Eine erste Transformationsschaltung transformiert die Beschleunigungssignale der Beschleunigungsmesser in das System der virtuellen Plattform. In diesem System erfolgt die Signalverarbeitung der transformierten Beschleunigungssignale zur Bildung von Stellgrössen. Die so erhaltenen Stellgrössen werden in das System des Kreisels zurücktransformiert und an den Eingängen der Integratoren den Kreiselsignalen überlagert.

Offenbarung der Erfindung

Der Erfindung liegt die Aufgabe zugrunde, eine autonom ausrichtbare Kreiselanordnung der eingangs definierten Art so auszubilden, dass bei geringer Beeinflussbarkeit durch äussere Störungen eine schnelle und genaue Einstellung der Drallachse in die Nordrichtung erfolgt.

Erfindungsgemäss wird diese Aufgabe dadurch gelöst, dass
- zur schnellen Ausrichtung der Drallachse in die Nordrichtung die die Neigungswinkel darstellenden Signale der Neigungsgeber auf ein Kalmanfilter geschaltet sind, der Schätzwerte für Lagefehler des stabilisierten Elements liefert,
- die Schätzwerte der Lagefehler als Regelabweichungs-Signale auf einen optimalen Regler mit mehreren Reglereingängen und mehreren Reglerausgängen aufgeschaltet sind, bei welchem die Reglerausgangsgrößen aus den Reglereingangsgrößen nach einem Optimierungsalgorithmus bestimmt sind, und
- die Stellsignale des Reglers auf je einen Drehmomenterzeuger des Kreisels aufgeschaltet sind.

Das Kalmanfilter berechnet unter Berücksichtigung der Umgebungsstörungen aus Signalen der Neigungsfühlermittel Schätzwerte der Fehlerwinkel. Dadurch werden äussere Störungen weitgehend eliminiert. Ein optimaler Regler liefert aus diesen Fehlerwinkeln Stellsignale. Der optimale Regler gestattet eine schnelle Einstellung der Plattform und des Kreisels.

Ausgestaltungen der Erfindung sind Gegenstand der abhängigen Patentansprüche.

Einige Ausführungsbeispiele der Erfindung sind nachstehend unter Bezugnahme auf die zugehörigen Zeichnungen näher erläutert.

Kurze Beschreibung der Zeichnungen

Fig. 1      ist eine schematische Darstellung und zeigt den mechanischen Aufbau der Kreiselanordnung und die allgemeine Struktur des Ausrichtkreises.

Fig. 2      ist eine schematische Darstellung ähnlich Fig. 1 und zeigt im einzelnen eine Ausführungsform des Ausrichtkreises.

Fig. 3      ist eine schematische Darstellung ähnlich Fig.2 und zeigt im einzelnen eine zweite Ausführungsform des Ausrichtkreises.

Fig. 4      zeigt schematisch das stabilisierte Element mit den Sensoren.

Fig. 5      ist ein Blockdiagramm und zeigt die prinzipielle Struktur der Fehlerkompensation.

Fig. 6      ist ein Blockdiagramm und zeigt ein lineares Temperaturmodell für die Feinkompensation.

Fig. 7      veranschaulicht die Kompensation von Kreiselfehlern durch Ausrichtung des Kreisels einmal nach Nord und einmal nach Süd und verdeutlicht die dabei verwendeten Winkel,

Fig. 8      ist eine schematische Darstellung ähnlich Fig. 3 und zeigt Maßnahmen zur Fehleridentifizierung bei der in Fig. 3 dargestellten Ausführungsform.

Bevorzugte Ausführungsform der Erfindung

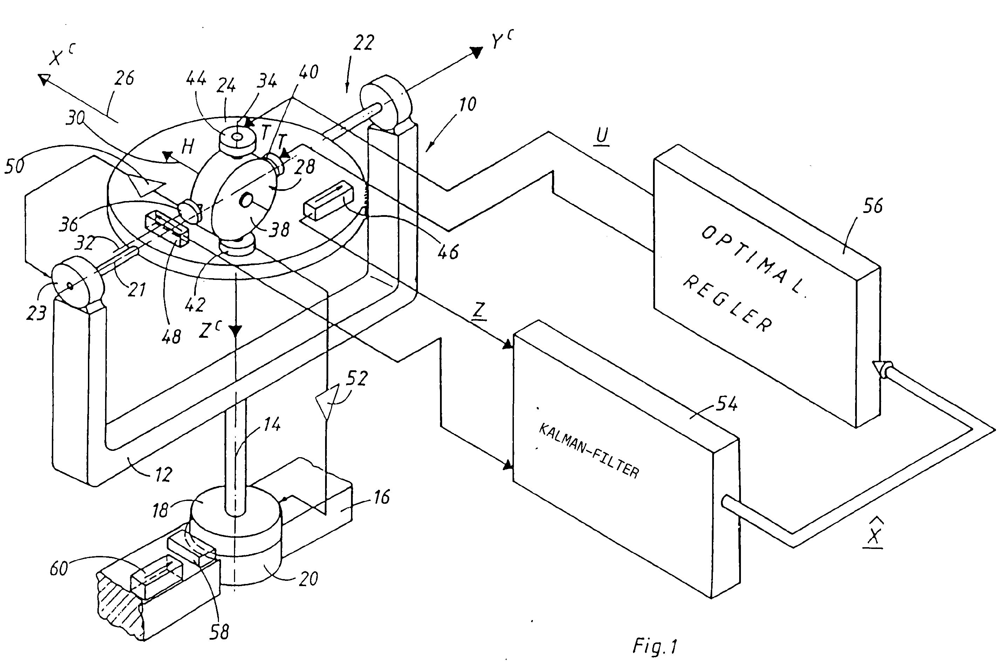

In Fig. 1 ist mit 10 eine zweiachsige Plattform bezeichnet. Die Plattform 10 weist einen ersten Rahmen in Form eines Azimutrahmens 12 auf. Der Azimutrahmen 12 ist um eine im wesentlichen vertikale Azimutachse 14 drehbar in einem Gehäuse 16 gelagert. Der Azimutrahmen 12 ist mittels eines Stellmotors 18 gegenüber dem Gehäuse 16 verdrehbar. Ein Winkelgeber 20 liefert den Drehwinkel $\psi$ des Azimutrahmens 12 um die Azimutachse.

In dem Azimutrahmen 12 ist ein zweiter Rahmen 22 um eine zu der Azimutachse 14 senkrechte Plattformachse 21 drehbar gelagert. Der Rahmen 22 ist durch einen Stellmotor 23 gegenüber dem Azimutrahmen 12 verdrehbar. Der zweite Rahmen 22 bildet ein stabilisiertes Element 24. Das stabilisierte Element 24 ist um die im wesentlichen senkrechte Azimutachse 14 und die im wesentlichen waagerechte Plattformachse 21 in noch zu beschreibender Weise von den Bewegungen des Gehäuses 16 entkoppelt. Keine Entkopplung erfolgt hinsichtlich einer dritten, zu der Azimutachse 14 und der Plattformachse 21 senkrechten Achse 26. Um diese Achse 26 kann daher das stabilisierte Element 24 geneigt sein.

Das stabilisierte Element 24 definiert ein Koordinatensystem mit den Koordinatenachsen $x^c$, $y^c$ und $z^c$. Dabei fällt die Koordinatenachse $y^c$ mit der Plattformachse 21 zusammen. In dem stabilisierten Element sitzt ein zweiachsiger, elektrisch gefesselter Kreisel 28. Die Drallachse 30 des Kreisels 28 zeigt in die Richtung der Koordinatenachse $x^c$. Eine erste Eingangsachse 32 des Kreisels 28 ist parallel zu der Koordinatenachse $y^c$ und damit zu der Plattformachse 21. Eine zweite Eingangsachse 34 des Kreisels 28 ist parallel zu der Koordinatenachse $z^c$ und damit zu der Azimutachse 14. Auf der ersten Eingangsachse 32 sitzt ein erster Abgriff 36. Der erste Abgriff 36 liefert ein Abgriffsignal nach Maßgabe der Auslenkung des nicht sichtbaren Kreiselrotors gegenüber dem Gehäuse 38 des Kreisels 28 aus einer Nullage um die Eingangsachse 32. Auf der Eingangsachse 32 sitzt weiterhin ein erster Drehmomenterzeuger 40. Der Drehmomenterzeuger 40 kann ein Drehmoment um die Eingangsachse 32 auf den Kreiselrotor ausüben. Auf der zweiten Eingangsachse 34 sitzt ein zweiter Abgriff 42. Der zweite Abgriff 42 liefert ein Abgriffsignal nach Maßgabe der Auslenkung des Kreiselrotors gegenüber dem Gehäuse 38 des Kreisels 28 aus einer Nullage um die Eingangsachse 34. Auf der zweiten Eingangsachse 34 sitzt weiterhin ein zweiter Drehmomenterzeuger 44. Der zweite Drehmomenterzeuger 44 kann ein Drehmoment um die zweite Eingangsachse 34 auf den Kreiselrotor ausüben.

In dem stabilisierten Element 24 ist ein erster Beschleunigungsmesser 46 vorgesehen. Die durch einen Pfeil angedeutete Empfindlichkeitsachse des ersten Beschleunigungsmessers 46 ist parallel zu der ersten Eingangsachse 32 des Kreisels 28. In dem stabilisierten Element 24 ist weiterhin ein zweiter Beschleunigungsmesser 48 vorgesehen. Die ebenfalls durch einen Pfeil angedeutete Empfindlichkeitsachse des zweiten Beschleunigungsmessers 48 ist parallel zu der Drallachse 30 des Kreisels 28.

Das Abgriffsignal des ersten Abgriffs 36 ist über einen Verstärker 50 auf den Stellmotor 23 geschaltet, welcher den Rahmen 22 gegenüber dem Azimutrahmen 12 verdreht. Das Abgriffsignal des zweiten Abgriffs 42 ist über einen Verstärker 52 auf den Stellmotor 18 geschaltet, welcher den Azimutrahmen 12 gegenüber dem Gehäuse 16 verdreht.

Die Ausgangssignale der Beschleunigungsmesser 46 und 48 sind auf einen optimalen Zustandsschatzer 54 in Form eines Kalmanfilters geschaltet. Die Ausgangssignale der Beschleunigungsmesser 46 und 48 sind zu einem Vektor $\underline{z}$ zusammengefaßt. Der Zustandsschätzer 54 liefert einen optimal geschätzten Zustandsvek-tor $\underline{\hat{x}}$. Die Elemente dieses Zustandsvektors sind Lagefehler der Plattform, nämlich Winkelfehler $\Theta_y$ und $\Theta_z$ um die Plattformachse 21 und die Azimutachse 14. Die Schätzwerte $\underline{\hat{x}}$ sind auf einen optimalen Regler 56 geschaltet. Der optimale Regler 56 liefert Stellgrößen, die zu einem Stellgrößenvektor $\underline{U}$ zusammengefaßt werden kön-nen. Die Stellgrößen sind auf je einen der Drehmomenterzeuger 40 und 44 geschaltet.

Am Gehäuse 16 sind weiterhin Beschleunigungsmesser 58 und 60 mit zueinander und zu der Azimutachse 14 senkrechten Empfindlichkeitsachsen angeordnet.

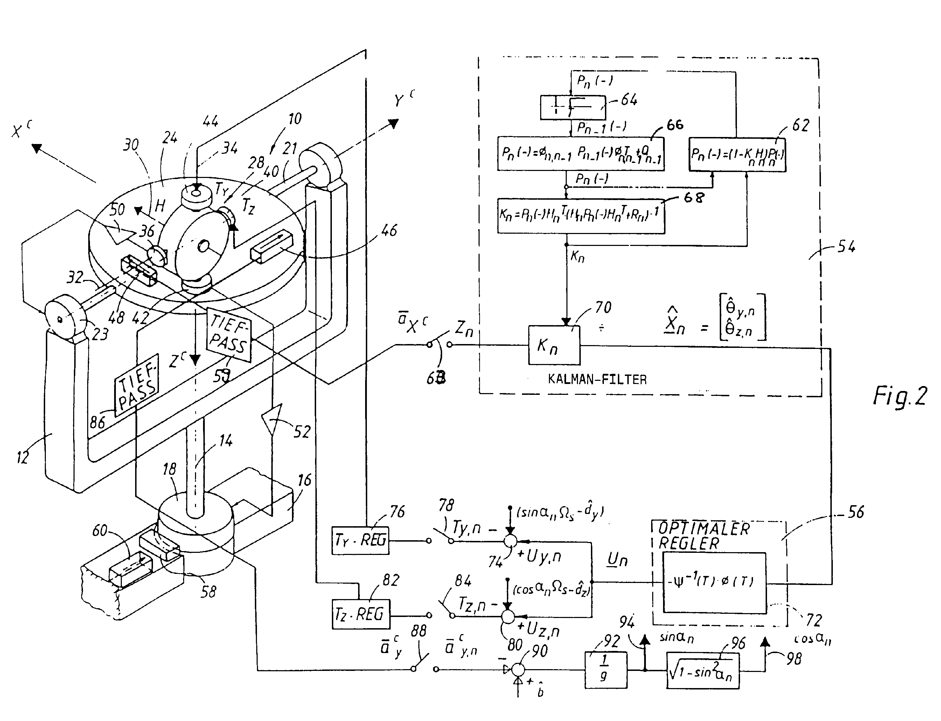

Der mechanische Aufbau der Kreiselanordnung von Fig. 2 entspricht dem von Fig. 1. Entsprechende Teile sind in Fig. 2 mit den gleichen Bezugszeichen versehen wie dort.

In Fig. 2 ist der Aufbau des Kalmanfilters 54 und des optimalen Reglers 56 näher dargestellt.

Bei der Ausführungsform nach Fig. 2 erhält das Kalmanfilter 54 die Beschleunigungssignale $a_x^c$ von dem Beschleunigungsmesser 48. Diese Beschleunigungssignale $a_x^c$ stellen die Beschleunigung in Richtung der Koordinatenachse $x^c$ dar und liefern ein Maß für die Neigung des stabilisierten Elements 24 um die Plattformachse 21. Die Beschleunigungssignale $a_x^c$ von dem Beschleunigungsmesser 48 werden durch ein Tiefpaßfilter 59 geglättet. Das geglättete Beschleunigungssignal $\overline{a_x^c}$ wird in einem Takt mit einer Taktperiode T abgetastet und digitalisiert. Das ist in Fig. 2 durch einen Schalter 63 symbolisiert. Es ergibt sich eine Folge von Meßwerten $z_n$ mit dem Takt, wobei der Index "n" die laufende Nummer des Taktes ist.

Das Kalman-Filter ist charakterisiert durch eine Zustands- oder Systemgleichung und eine Meßgleichung. Die Zustands- oder Systemgleichung gibt das dynamische Verhalten eines Modells des Systems, hier der Plattform 10, wieder. Praktisch gibt die Zustandsgleichung die Änderung eines Zustandsvektors, also eines Vektors, der von der Zustandsvariablen gebildet ist, als Funktion des Zustandsvektors selbst an. Die Meßgleichung liefert den Zusammenhang zwischen beobachtbaren Meßgrößen und dem Zustandsvektor.

Im vorliegenden Fall ist der Zustandsvektor $\underline{\hat{x}}_n$ gegeben durch die Lagefehler des stabilisierten Elements 24 um die Azimutachse 14 und die Plattformachse 21.

$$(1) \qquad \hat{\underline{x}}_n = \begin{bmatrix} \hat{\theta}_{y,n} \\ \\ \hat{\theta}_{z,n} \end{bmatrix}$$

Mit diesem Zustandsvektor wird die Zustands- oder Systemgleichung (in stetiger Form als Differentialgleichung geschrieben):

$$(2) \qquad \begin{bmatrix} \dot{\theta}_y(t) \\ \\ \dot{\theta}_z(t) \end{bmatrix} = \begin{bmatrix} 0 & \Omega_c \\ \\ -\Omega_c & 0 \end{bmatrix} \cdot \begin{bmatrix} \theta_y(t) \\ \\ \theta_z(t) \end{bmatrix} + \begin{bmatrix} u_y^c(t) \\ \\ u_z^c(t) \end{bmatrix} + \begin{bmatrix} d_y \\ \\ d_z \end{bmatrix}$$

Darin ist $\Omega_c$ die Horizontalkomponente der Erddrehung, $u_y^c(t)$ und $c_z^c(t)$ sind die Stellgrößen des optimalen Reglers 56 und $d_y$, $d_z$ sind die Kreiseldriften. Eine Änderung des Lagefehlers kommt dadurch zustande, daß an der Eingangsachse des Kreisels eine Komponente der Horizontalkomponenten $\Omega_c$ der Erddrehung wirksam wird, wobei diese Komponente bei kleinen Winkeln dem Lagefehler proportional ist, ferner durch Stellgrößen von dem optimalen Regler 56 und durch die Kreiseldriften. Die Meßgleichung verknüpft die gemessene Größe $a_x^c(t)$ mit den Zustandsgrößen durch einen Meßmatrix $\underline{H}$. Im vorliegenden Fall ist die Meßgleichung (wieder in stetiger Form geschrieben)

$$(3) \qquad a_x^c(t) = [ \cos \alpha \; ; \; -\sin \alpha \; ] \cdot \begin{bmatrix} \theta_y(t) \\ \\ \theta_z(t) \end{bmatrix} + b_x$$

Dabei ist der Lagewinkel des stabilisierten Elements 24 um die nicht- stabilisierte dritte Achse, die senkrecht zu der Azimutachse 14 und zu der Plattformachse 21 verläuft. Mit "$b_x$" ist der Nullpunktfehler des Beschleunigungsmessers 48 bezeichnet.

Die Schätzwerte $\hat{\theta}_{y,n}$ und $\hat{\theta}_{z,n}$ erden in einem Kalman-Filter in üblicher Weise nach einer Rekursionsformel in der Weise gebildet, daß der Vorhersagewert für den Zustandsvektor korrigiert wird mit einem Korrekturterm. Dieser Korrekturterm enthält die Differenz zwischen der gemessenen Meßgröße (oder einem Meßgrößenvektor) und der nach der Meßgleichung aus dem Vorhersagewert des Zustandsvektors zu erwartenden Meßgröße. Diese Differenz wird jeweils multipliziert mit einer Kalmanverstärkung $k_n$. Im vorliegenden Fall sind die Elemente des Zustandsvektors Lagefehler. Man kann daher den extrapolierten Vorhersagewert des Zustandsvektors null setzen, da die geschätzten Lagefehler immer ausgeregelt werden. Damit vereinfacht sich die Gleichung für den Schätzwert des Zustandsvektors zu

$$(4) \qquad \hat{\underline{x}}_n = \underline{k}_n z_n \, ,$$

wobei $\hat{\underline{x}}_n$ in GLeichung 1) definiert ist und $\underline{k}_n$ ein Vektor von Kalman-Verstärkungen ist.

Der Vektor $\underline{k}_n$ wird wiederum in bekannter Weise rekursiv aus den Kovarianz-Matritzen P des Schätzfehlers, der Systemmatrix $\phi$, der Meßmatrix H (in diesem Fall Meßvektor $\underline{H}$) und den Kovarianzen Q und R des Prozessrauschens bzw. des Meßrauschens gebildet. Das ist in Fig. 2 dargestellt.

Aus $\underline{k}_n$ und dem Vorhersagewert $P_n(-)$ wird die Varianz $P_n$ des Schätzfehlers berechnet nach der Beziehung

$$(5) \qquad p_n = (\underline{I} - k_n H_n) \, p_n(-) \, ,$$

wobei $\underline{I}$ die Identitätsmatrix ist. Das ist durch Block 62 dargestellt. Die so berechnete Varianz $P_n$ des Schätzfehlers wird um einen Takt verzögert. Das ist durch Block 64 dargestellt. Dadurch wird daraus im nächsten Takt $P_{n-1}$. Hieraus wird nach der Beziehung

$$(6) \qquad p_n(-) = \phi_{n,n-1} \, p_{n-1} \, \phi_{n,n-1}^T + Q_{n-1}$$

mit der Systemmatrix $\phi$ und der transponierten Systemmatrix $\phi^T$ der Vorhersagewert für die Varianz des Schätzfehlers berechnet. Das ist durch BLock 66 dargestellt. Aus diesem Vorhersagewert $P_n(-)$ wird wiederum mit der Meßmatrix H und der transponierten Meßmatrix $H^T$ sowie der Varianz $R_n$ des Prozessrauschens nach der Beziehung

$$(7) \qquad k_n = P_n(-) \, H_n^T \cdot (H_n \, P_n(-) \, H_n^T + R_n)^{-1}$$

die Kalman-Verstärkung $K_n$ bestimmt, wie durch Block 68 dargestellt ist.

Mit der so für jeden Takt bestimmten Kalman-Verstärkung, die im vorliegenden Fall ein Vektor ist, wird gemäß Gleichung (4) der Schätzwert des Zustandsvektors $\hat{\underline{x}}_n$ gebildet. Die Multiplikation von $z_n$ mit $K_n$ ist in Fig. 2 durch Block 70 dargestellt. Der von dem Kalmanfilter 54 gelieferte Schätzwert des Zustandsvektors $\underline{x}_n$ ist auf den optimalen Regler 56 aufgeschaltet. Der optimale Regler 56 liefert Stellgrößen $U_{y,n}$ und $U_{z,n}$, die zu einem Stellvektor $\underline{u}_n$ zusammengefaßt werden können. Der Stellvektor $\underline{u}_n$ hängt mit dem Schätzwert des Zustandsvektors $\hat{\underline{x}}_n$, also den Schätzwerten der Lagefehler nach der Beziehung

$$(8) \qquad \underline{u}_n = -\psi^{-1}(T) \cdot \phi(T) \, \hat{\underline{x}}_n$$

zusammen, wie durch Block 72 angedeutet ist.

Darin ist

$$(9) \qquad \psi^{-1}(T) = \begin{bmatrix} \dfrac{1}{T} & \dfrac{\Omega_C}{T} \\[2ex] -\dfrac{\Omega_C}{T} & \dfrac{1}{T} \end{bmatrix}$$

und

$$(10) \qquad \phi(T) = \begin{bmatrix} 1 & \Omega_C T \\[2ex] -\Omega_C T & 1 \end{bmatrix}$$

Dabei ist T die Abtastperiode.

Zu der Stellgröße $u_{y,n}$ wird in einem Punkt 74 ein Korrekturterm

$$(\sin\alpha_n \, \Omega_s - \hat{d}_y)$$

überlagert. Darin ist $\alpha_n$ der Neigungswinkel des stabilisierten Elements um die zu der Azimutachse 14 und der Plattformachse 21 senkrechten dritten Achse, $\Omega_s$ die Vertikalkomponente der Erddrehung und $\hat{d}_y$ ein Schätzwert für die Drift des Kreisels um die Eingangsachse 32. Der erste Term trägt der Tatsache Rechnung, daß durch eine Neigung des Kreisels 28 um die besagte dritte Achse eine Komponente der Vertikalkomponente $\Omega_s$ der Erddrehung an der Eingangsachse 32 des Kreisels wirksam wird. Dieser Einfluß wird durch den ersten Term kompensiert. Der zweite Term kompensiert die Kreiseldrift. Die so kompensierte Stellgröße, die mit $T_{y,n}$ bezeichnet ist, wird mit dem Takt in ein $T_y$-Register 76 eingegeben. Der Takt ist wieder durch einen Schalter 78 dargestellt. Der Inhalt des $T_y$-Registers 76 wird in ein analoges Signal umgesetzt und auf den Drehmomenterzeuger 44 aufgeschaltet.

In entsprechender Weise wird zu der Stellgröße $u_{z,n}$ in einem Punkt 80 ein Korrekturterm

$$(\cos\alpha_n \, \Omega_s - \hat{d}_z)$$

überlagert, wobei $\hat{d}_z$ ein Schätzwert für die Kreiseldrift um die Eingangsachse 34 ist. Der erste Term kompensiert die an der Eingangsachse 34 wirksame Komponente der Vertikalkomponente $\Omega_s$ der Erddrehung. Der zweite Term kompensiert die Kreiseldrift. Die so kompensierte Stellgröße, die mit $T_{z,n}$ bezeichnet ist, wird mit dem Takt in ein $T_z$-Register 82 eingegeben. Der Takt ist durch einen Schalter 84 dargestellt. Der Inhalt des $T_z$-Registers 82 wird in ein analoges Signal umgesetzt und auf den Drehmomenterzeuger 40 aufgeschaltet.

Der Beschleunigungsmesser 46 dient dazu, den Winkel $\alpha_n$, also die Neigung um die nicht-stabilisierte dritte Achse, und dessen Winkelfunktionen Sinus und Kosinus zu bestimmen. Das Beschleunigungssignal des Beschleunigungsmessers 46 wird durch ein Tiefpaßfilter 86 geglättet. Das geglättete Beschleunigungssignal $\bar{a}_y^c$ wird in dem Takt digitalisiert und als Folge von Digitalwerten $\bar{a}^c_{y,n}$ weiterverarbeitet. Das ist durch einen Schalter 88 symbolisiert. In einem Punkt wird dem Digitalwert $\overline{a}^c_{y,n}$ mit entgegengesetztem Vorzeichen ein Wert überlagert, der einem Schätzwert $\hat{b}_y$ des Nullpunktfehlers des Beschleunigungsmessers 46 entspricht. Der so erhaltene korrigierte Beschleunigungsmeßwert wird durch die Erdbeschleunigung g dividiert. Das ist in Fig. 2 durch einen Block 92 dargestellt. Aus dieser Division ergibt sich $\sin\alpha_n$, das an einem Ausgang 94 zur Verfügung steht. Aus dem so erhaltenen Wert $\sin\alpha_n$ wird durch Bildung von

$$\sqrt{1 - \sin^2\alpha_n},$$

die in Fig. 2 durch den Block 96 dargestellt ist, ein Wert $\cos\alpha_n$ gewonnen. Dieser Wert von $\cos\alpha_n$ steht an einem Ausgang 98 zur Verfügung. Die so erhaltenen Werte $\sin\alpha_n$ und $\cos\alpha_n$ in nicht näher dargestellter Weise dienen zur Bildung der Kompensationssignale, die in den Punkten 74 bzw. 80 den Stellgrößen $u_{y,n}$ bzw. $u_{z,n}$ überlagert werden.

Die Wirkungsweise der beschriebenen Anordnung ist folgende:

Der Kreisel 28 soll sich im Endzustand so einstellen, daß die Drallachse 30 horizontal angeordnet ist und nach Nord zeigt. Diese Bedingung kann mit den zwei Freiheitsgraden der zweiachsigen Plattform 10 erfüllt werden. Allerdings kann in diesem Endzustand das stabilisierte Element 24 um die dritte, zu der Azimutachse 14 und der Plattformachse 21 senkrechte, nicht-stabilisierte Achse um einen Winkel $\alpha$ geneigt sein, wenn das Gehäuse 16 entsprechend geneigt ist. Das kann der Fall sein, wenn das Gehäuse 16 in einem Fahrzeug montiert ist. Der Kreisel 28 wird in die Nähe der gesuchten Endstellung vororientiert.

In der gesuchten Endstellung ist der Kreisel 28 stabil:

Der Beschleunigungsmesser 48 liefert kein Beschleunigungssignal von der Erdbeschleunigung mehr, da seine Empfindlichkeitsachse parallel zu der Drallachse 30 horizontal ist. Die Eingangsachse 32 erfaßt keine Komponente der Horizontalkomponente $\Omega_C$ der Erddrehung mehr. Auch an der Eingangsachse 34 wird keine Komponente der Horizontalkomponente $\Omega_C$ der Erddrehung wirksam, da die Eingangsachse 34 senkrecht zu der Nordrichtung steht. Die Komponenten der Vertikalkomponente $\Omega_S$ der Erddrehung, die an den Eingangsachsen 32 und 34 wirksam werden, sind durch die Kompensationssignale in den Punkten 74 und 80 kompensiert.

Das Kalmanfilter 54 liefert aus den Beschleunigungswerten $Z_n$ Schätzwerte $\hat{\theta}_{y,n}$ und $\hat{\theta}_{z,n}$ für Lagefehler, also für die Winkelabweichungen der Plattform 10 von dem oben erwähnten Endzustand, in welchem die Drallachse 30 horizontal und nach Nord ausgerichtet ist. Die Schätzwerte $\hat{\theta}_{y,n}$ und $\hat{\theta}_{z,n}$ sind zunächst, bei den Rekursionsschritten zu Beginn der Ausrichtung ziemlich groß. Das liegt an dem Verhalten des Kalman-Filters. Diese anfänglich großen Schätzwerte bewirken über den optimalen Regler eine schnelle Annäherung an die Endstellung. Anschließend nehmen die Schätzwerte schnell kleinere Werte an, so daß die Endstellung dann feinfühlig und ohne Überschwingen erreicht wird.

Die Schätzwerte $\hat{\underline{x}}_n$ liefern über den optimalen Regler 56 die Stellgrößen $\underline{u}_n$. Die Stellgröße $T_y$ wird dabei auf den Drehmomenterzeuger 44 aufgeschaltet. Dieser bewirkt eine Auslenkung des Rotors des Kreisels 28 um die Eingangsachse 32. Der auf dieser Eingangsachse 32 sitzende Abgriff 36 führt über den Stellmotor 23 das stabilisierte Element 24 dieser Auslenkung des Kreisels 28 nach. Das geschieht, bis $T_{y,n}$ null wird. Die Stellgröße $T_z$ ist auf den Drehmomenterzeuger 40 aufgeschaltet. Dieser bewirkt eine Auslenkung des Rotors des Kreisels 28 um die Eingangsachse 34. Der auf dieser Eingangsachse 34 sitzende Abgriff 42 führt über den Stellmotor 18 das stabilisierte Element 24 dieser Auslenkung des Kreisels 28 nach. Auch das geschieht, bis $T_{z,n}$ null wird.

Die beschriebene Kreiselanordnung gestattet eine schnelle und von äußeren Störungen weitgehend unbeeinflußte Ausrichtung der Drallachse 30 des Kreisels 28 nach Nord.

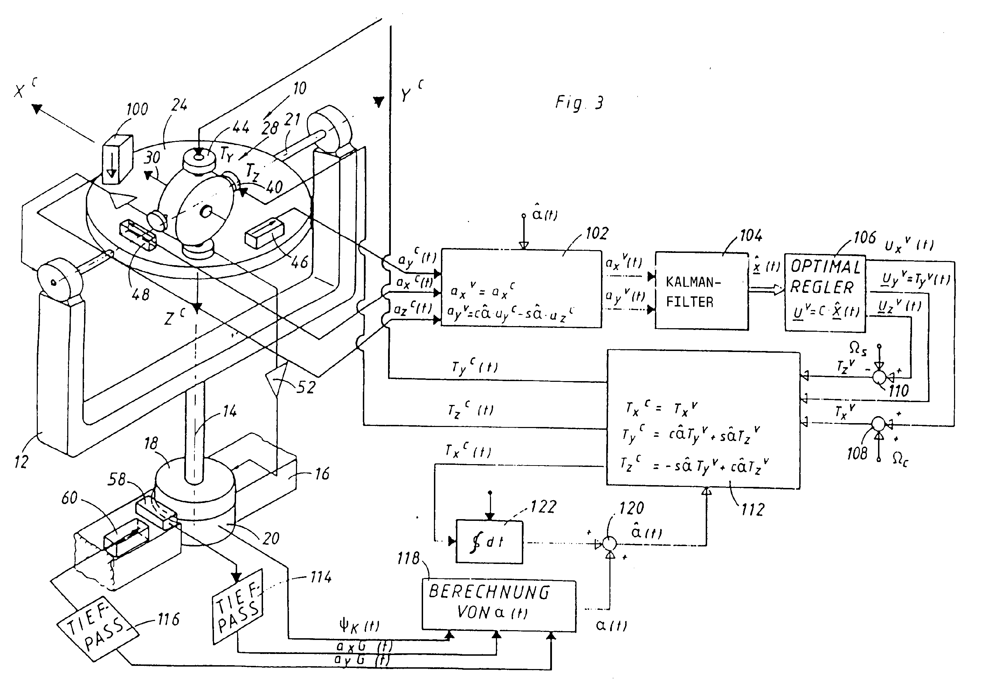

Fig. 3 zeigt eine autonom ausrichtbare Kreiselanordnung, bei welcher eine fortlaufende, optimale Bestimmung des Neigungswinkels des stabilisierten Elements um die nicht-stabilisierte, dritte Achse erfolgt. Der mechanische Grundaufbau ist der gleiche wie bei den Figuren 1 und 2. Entsprechende Teile sind wieder mit den gleichen Bezugszeichen versehen wie dort.

Zusätzlich zu den beiden Beschleunigungsmessern 46 und 48 ist in Fig. 3 noch ein dritter Beschleunigungsmesser 100 vorgesehen, dessen Empfindlichkeitsachse senkrecht zu den Empfindlichkeitsachsen der Beschleunigungsmesser 46 und 48 verläuft. Die drei Beschleunigungsmesser 46, 48 und 100 liefern drei Beschleunigungssignale $a^c_x(t)$, $a^c_y(t)$ und $-a^c_z(t)$. Die drei Beschleunigungssignale $a^c_x(t)$, $a^c_y(t)$ und $a^c_z(t)$ sind auf erste Transformationsmittel 102 aufgeschaltet. Die Transformationsmittel 102 erhalten weiterhin einen Schätzwert $\hat{\alpha}$ des Neigungswinkels des stabilisierten Elements 24. Diese ersten Transformationsmittel 102 liefern nach der Beziehung

$$(11) \qquad a^v_x = a^c_x$$
$$a^v_y = \cos\hat{\alpha}\, a^c_y - \sin\hat{\alpha}\, a^c_z$$

Beschleunigungssignale, wie sie von zwei horizontal ausgerichteten Beschleunigungsmessern einer virtuellen, auch um die dritte Achse vom Gehäuse 16 entkoppelten Plattform geliefert würden. In dem System dieser virtuellen Plattform erfolgt die weitere Signalverarbeitung.

Die transformierten Beschleunigungssignale $a^v_x(t)$ und $a^v_y(t)$ sind auf ein Kalmanfilter 104 geschaltet. Das Kalmanfilter 104 liefert in ähnlicher Weise, wie es im Zusammenhang mit Fig. 2 beschrieben ist, Schätzwerte für die Lagefehler, die gemäß Gleichung (1) zu einem geschätzten Zustandsvektor $\hat{\underline{x}}(t)$ zusammengefaßt sind.

Der Zustandsvektor $\hat{\underline{x}}(t)$ ist auf einen optimalen Regler 106 aufgeschaltet. Der optimale Regler 106 liefert in ähnlicher Weise wie der optimale Regler 56 von Fig. 2 nach der Beziehung

$$(12) \qquad \underline{u}^v_x = c \cdot \hat{\underline{x}}(t)$$

Stellgrößen $u^v_x(t)$, $u^v_y(t)$ und $u^v_z(t)$, welche zu einem Stellvektor $\underline{u}^v_x$ zusammengefaßt sind.

In einem Punkt 108 wird der Stellgröße $u^v_x(t)$ noch ein Signal überlagert, das der Horizontalkomponente $\Omega_c$ der Erddrehung entspricht. In einem Punkt 110 wird der Stellgröße $u^v_z(t)$ mit entgegengesetztem Vorzeichen ein Signal überlagert, das der Vertikalkomponente $\Omega_s$ der Erddrehung entspricht. Die Stellgröße $u^v_y(t)$ bleibt unverändert. Es ergeben sich dann drei Signale

$$(13) \qquad \begin{aligned} T^v_x &= u^v_x + \Omega_c \\ T^v_y &= u^v_y \\ T^v_z &= u^v_z - \Omega_s \end{aligned}$$

Diese drei Signale entsprechen Stellgrößen, die zur Ausrichtung der "virtuellen" dreiachsigen Plattform um die drei Plattformachsen erforderlich wären. Die drei "virtuellen" Stellgrößen sind auf zweite Transformationsmittel 112 aufgeschaltet. Die zweiten Transformationsmittel 112 erhalten ebenso wie die ersten Transformationsmittel 102 einen Schätzwert $\hat{\alpha}(t)$ der Neigung des stabilisierten Elements. Die zweiten Transformationsmittel 112 bewirken eine Rücktransformation der "virtuellen" Stellgrößen in das Koordinatensystem des stabilisierten Elements 24. Es ergeben sich auf das Koordinatensystem des stabilisierten Elements 24 bezogene Stellgrößen

$$(14) \qquad \begin{aligned} T^c_x &= T^v_x \\ T^c_y &= \cos\hat{\alpha}\, T^v_y + \sin\hat{\alpha}\, T^v_z \\ T^c_z &= -\sin\hat{\alpha}\, T^v_y + \cos\hat{\alpha}\, T^v_z \end{aligned}$$

Das Stellsignal $T^c_y$ von den Transformationsmitteln 112 ist auf den Drehmomenterzeuger 44 des Kreisels 28 geschaltet. Das Stellsignal $T^c_z$ von den Transformationsmitteln 112 ist auf den Drehmomenterzeuger 40 des Kreisels 28 geschaltet.

Das Stellsignal $T^c_x$ dient der Bestimmung des Schätzwertes $\hat{\alpha}(t)$ des Neigungswinkels. Der Neigungswinkel $\alpha(t)$ wird berechnet aus den Beschleunigungssignalen $a^G_x(t)$ und $a^G_y(t)$ der an dem Gehäuse 16 sitzenden Beschleunigungsmesser 58 und 60 und dem Azimutwinkel-Signal $\psi(t)$ von dem Winkelgeber 20. Die Beschleunigungssignale $a^G_x(t)$ und $a^G_y(t)$ werden dabei durch je ein Tiefpaßfilter 114 bzw. 116 geglättet. Rechenmittel 118 erzeugen daraus ein Signal, das den Neigungswinkel $\alpha(t)$ darstellt. Diesem Signal $\alpha(t)$ wird in einem Punkt 120 ein Feinkorrektursignal überlagert. Dieses Feinkorrektursignal wird erhalten durch Integration der Stellgröße $T^c_x(t)$ von den Transformationsmitteln 112. Die Integration ist in Fig. 3 durch einen Block 122 dargestellt.

Die Stellgröße $T^c_x(t)$ ist entstanden aus einem Ausrichtfehler um die x-Achse der virtuellen Plattform. Sie korrigiert diesen Ausrichtfehler durch Integration, so wie die Stellgrößen $T^c_y$ und $T^c_z$ an den Drehmomenterzeugern 44 und 40 durch die Kreiselgesetze integriert werden. Das geschieht, bis $T^c_x$ zu null wird. Dann ist die virtuelle Plattform horizontal ausgerichtet und der Neigungswinkel $\hat{\alpha}$ des stabilisierten Elements 24 der realen Plattform richtig angegeben.

Im übrigen erfolgt die Ausrichtung der Plattform 10 so, daß die Drallachse 30 horizontal nach Nord zeigt, durch die Stellgrößen $T^c_y$ und $T^c_z$ so, wie es im Zusammenhang mit Fig. 2 beschrieben ist. Die Kompensation der Komponenten der Erddrehung erfolgt in den Punkten 108 und 110 im System der virtuellen Plattform.

Durch die bisher beschriebenen Maßnahmen wird eine schnelle Ausrichtung des Kreisels nach Nord bei Unterdrückung des Einflusses von äußeren Störungen erreicht. Dabei wird die Kreiseldrift als bekannte gemessene Größe angesehen. Dabei ergeben sich jedoch Schwierigkeiten, wenn eine Plattform unmittelbar nach dem Einschalten schnell und genau ausgerichtet werden soll. Durch Aufheizvorgänge in der Plattform und im Kreisel ändert sich die Kreiseldrift unmittelbar nach dem Einschalten in zufälliger Weise. Das verhindert eine genaue Kompensation der Kreiseldrift.

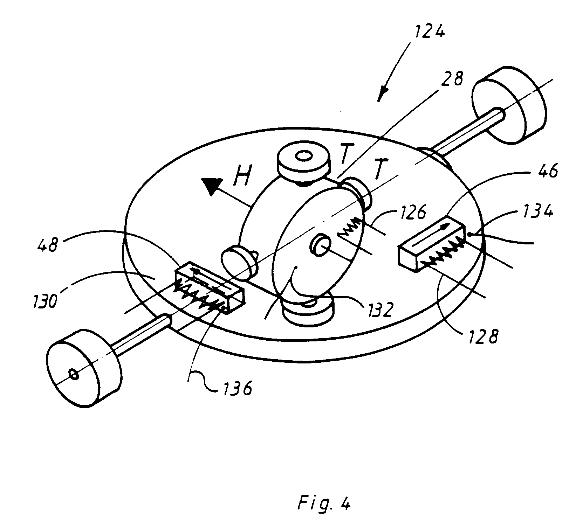

Um diese Probleme zu lösen und eine schnell und genau autonom ausrichtbare Kreiselanordnung zu schaffen, wird zunächst das stabilisierte Element 24 mit der Sensorbaugruppe von Kreisel 28 und Beschleunigungsmesser 46, 48 als kompakte, thermisch möglichst abgeschlossene Baugruppe 124 ausgeführt, in welcher die Sensoren in gut wärmeleitendem Kontakt miteinander stehen und schnell eine einheitliche Temperatur annehmen. Diese Baugruppe 124 ist in Fig. 4 schematisch dargestellt. Die Baugruppe 124 enthält Heizelemente 126, 128, 130 an den Sensoren 28, 46, 48, durch welche die Baugruppe 124 auf eine Temperatur knapp oberhalb des oberen Endes des geforderten Temperaturbereichs aufgeheizt wird. Bei einer praktischen Anwendung der Kreiselanordnung wird die Baugruppe 124 auf eine Temperatur von 72°C aufgeheizt. Auf dieser Temperatur wird die Baugruppe 124 durch Temperaturfühler 132, 134, 136 grob stabilisiert. Um reproduzierbare Anlaufbedingungen zu erhalten, erfolgen der Kreiselhochlauf und die Einschaltung der Servokreise erst, wenn die Temperatur der Baugruppe einen vorgegebenen Wert von z.B. 0°C überschreitet.

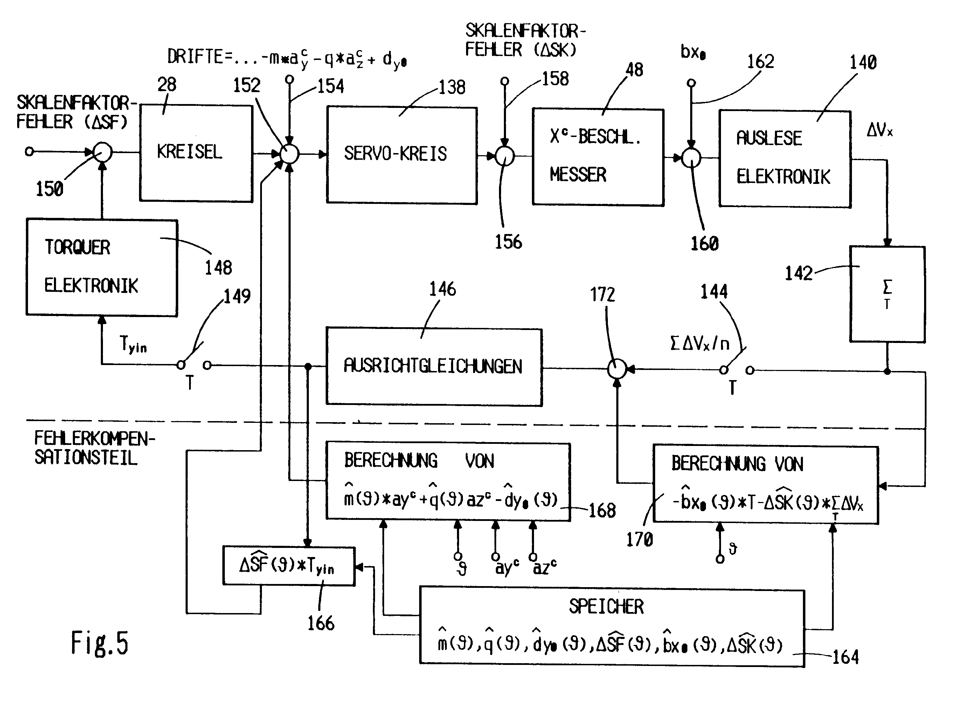

Die temperaturabhängigen Sensorfehler werden kompensiert. Fig. 5 zeigt als Blockdiagramm die Signalverarbeitungsstruktur mit Fehlerkompensation für die Koordinatenachse $y^c$, welche die Ausrichtgenauigkeit um die Azimutachse 14 bestimmt.

Der Kreisel 28 beeinflußt den Servokreis 138 mit dem Verstärker 52 von Fig. 2 oder 3. Der Servokreis 138 beeinflußt über den Stellmotor 18 und den Rahmen 12 den Beschleunigungsmesser 48. Das Signal des Beschleunigungsmessers 48 ergibt über eine Ausleseelektronik 140 Geschwindigkeitsinkremente $\Delta v_x$. Die Geschwindigkeitsinkremente $\Delta v_x$ werden über die Taktperiode T aufsummiert. Das ist in Fig. 5 durch Block 142 dargestellt. Die aufsummierten Geschwindigkeitselemente

$$\sum_T \Delta v_x / n$$

werden im Takt abgetastet. Das ist in Fig. 5 durch einen Schalter 144 symbolisiert. Außerdem wird die Summe der Geschwindigkeitsinkremente durch ihre Anzahl dividiert.Der so erhaltene Beschleunigungsmeßwert wird der im Zusammenhang mit Fig. 2 oder 3 beschriebenen Signalverarbeitung unterworfen. Das ist in Fig. 5 durch den Block 146 "Ausricht-Gleichung" symbolisiert. Es ergibt sich eine Stellgröße $T_y$, die in dem Takt als $T_{y,n}$ auf die Elektronik 148 des Drehmomenterzeugers aufgeschaltet ist. Der Takt ist hierbei wieder durch Schalter 149 symbolisiert. Der Drehmomenterzeuger 44 erzeugt ein Drehmoment an dem Kreisel 28, das einen Eingang des Kreisels 28 darstellt. Das ist die Struktur der normalen Funktion der Kreiselanordnung, wie sie im Zusammenhang mit Fig. 2 und 3 beschrieben ist.

Der Kreisel 28 hat einen Skalenfaktorfehler $\Delta SF$. Dieser wird am Eingang des Kreisels 28 im Punkt 150 auf den Eingang, nämlich das vom Drehmomenterzeuger 44 ausgeübte Drehmoment, wirksam. Weiterhin ergeben sich verschiedene Driften

$$\ldots - m\, a_y^c - q a_z^c + d_{yo},$$

Darin ist $m$ die Masseunwucht, $q$ die "Quadratur" und $d_{yo}$ die normale Biasdrift. Die ersten beiden Terme sind abhängig von Beschleunigungen $a_y^c$ bzw. $a_z^c$. Diese Driften wirken am Ausgang des Kreisels im Punkt 152, wie durch Pfeil 154 angedeutet ist. Der Beschleunigungsmesser 48 hat ebenfalls einen Skalenfaktorfehler $\Delta SK$. Dieser ist im Punkt 156 auf den Eingang des Beschleunigungsmessers wirksam, wie in Fig. 5 durch Pfeil 158 angedeutet ist. Der Beschleunigungsmesser 48 hat einen Nullpunktfehler $b_{xo}$, der am Ausgang des Beschleunigungsmessers im Punkt 160 wirksam wird. Das ist in Fig. 5 durch Pfeil 162 dargestellt.

Die so auftretenden, temperaturabhängigen Fehler werden kompensiert. Zu diesem Zweck ist ein Speicher 164 vorgesehen. In dem Speicher 164 sind Schätzwerte für temperaturabhängige Fehlerparameter, nämlich die Masseunwucht $\hat{m}(\vartheta)$, die Quadratur $\hat{q}(\vartheta)$, die Drift $\hat{d}_{yo}(\vartheta)$, den Skalenfaktorfehler $\hat{\Delta SF}(\vartheta)$ des Kreisels 28, den Nullpunktfehler $\hat{b}_{xo}(\vartheta)$ des Beschleunigungsmessers 48 und den Skalenfaktorfehler $\Delta SK(\vartheta)$ des Beschleunigungsmessers 48 gespeichert. Rechenmittel 166 erhalten die Stellgröße $T_{y,n}$ von dem Block 146 "Ausricht-Gleichungen" und den Schätzwert des Skalenfaktorfehlers $\hat{\Delta SF}(\vartheta)$ von dem Speicher 164. Sie bilden daraus das Produkt

$$\hat{\Delta SF}(\vartheta) \cdot T_{y,n}.$$

Dieses Produkt wird im Punkt 152 am Ausgang des Kreisels 28 zu dem Kreiselsignal addiert. Damit wird der Einfluß des Skalenfaktorfehlers $\Delta SF$ im Punkt 150 kompensiert.

Rechenmittel 168 erhalten die Temperatur $\vartheta$ von den Fühlern 132, 134, 136 (Fig. 4) und die Beschleunigungen $a_y^c$ und $a_z^c$ von den Beschleunigungsmessern 46 und 100 sowie die Fehlerparameter $\hat{m}(\vartheta)$, $\hat{q}(\vartheta)$ und $\hat{d}_{yo}(\vartheta)$ und bilden daraus

$$\hat{m}(\vartheta) a_y^c + \hat{q}(\vartheta) a_z^c - \hat{d}_{yo}(\vartheta)$$

Dies so erhaltene Signal wird ebenfalls im Punkt 152 dem Kreiselsignal überlagert. Damit wird die Drift des Kreisels 28 hinsichtlich wesentlicher Einflüsse kompensiert.

Für den Fehler der Beschleunigungsmessung wird angesetzt

$$\Delta a_x^c = b_{xo} + \Delta SK \cdot a_x^c.$$

Im allgemeinen ist der Beschleunigungsmesserausgang nicht direkt zugänglich. Zugänglich sind nur die in einem Akkumulator aufsummierten Geschwindigkeitsinkremente. Für den Fehler dieser Summe gilt

$$(15) \quad \Delta \left( \sum_T \Delta v_x \right) = \int_t^{t+T} b_{xo} \, dt \quad + \quad \int_t^{t+T} \Delta sk. \; a^c_x(t) \, dt \; =$$

$$= \; b_{xo} T + \Delta SK \int_t^{t+T} a^c_x(t) \, dt \; =$$

$$= \; b_{xo} T + \Delta SK \sum_T \Delta v_x$$

Dementsprechend enthalten Rechenmittel 170 als Eingangsgrößen die Temperatur $\vartheta$ von den Temperaturfühlern 132, 134 und 136, die Summe der Geschwindigkeitsinkremente

$$\sum_T \Delta v_x$$

von dem Block 142 und die Fehlerparameter $\hat{b}_{xo}(\vartheta)$ und $\Delta \hat{S}K(\vartheta)$ von dem Speicher 170. Die Rechenmittel bilden daraus einen Korrekturterm

$$- \hat{b}_{xo}(\vartheta) \; . \; T - \Delta \hat{S}K(\vartheta) \; . \; \sum_T \Delta v_x$$

entsprechend Gleichung (15). Dieser Korrekturterm wird in einem Punkt 172 dem Beschleunigungswert

$$\sum_T \Delta v_{x/n}$$

überlagert. Auf diese Weise werden Fehler des Beschleunigungsmessers 48 kompensiert.

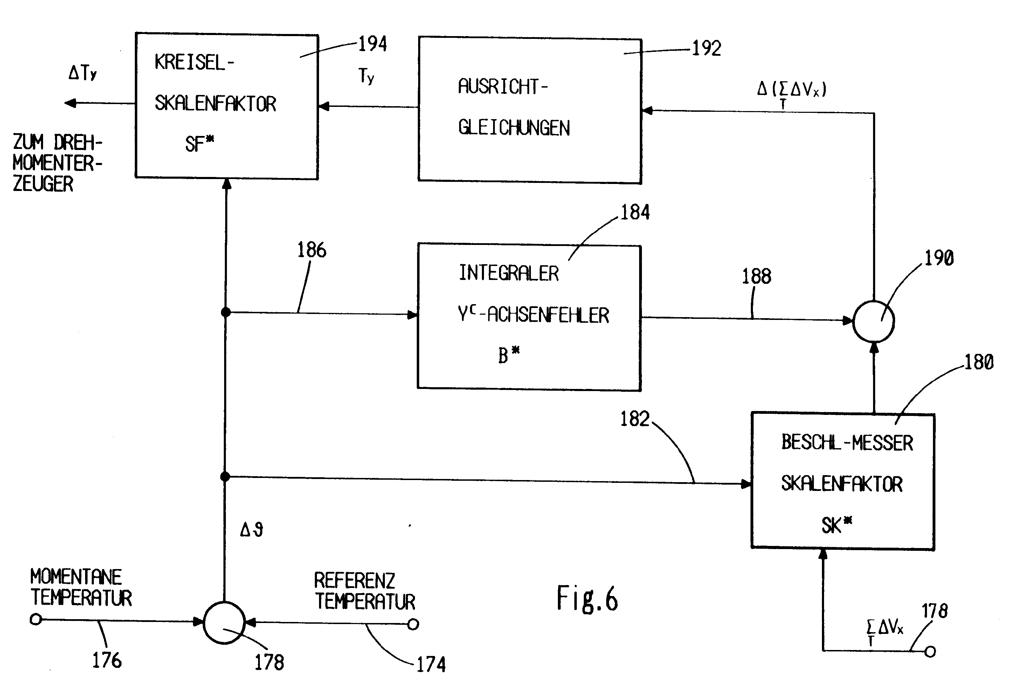

Um die maximale, nur durch die zufälligen Fehler der Sensoren begrenzte Ausrichtgenauigkeit zu erreichen ist häufig die vorstehend unter Bezugnahme auf Fig. 5 beschriebene Art der Fehlerkompensation nicht ausreichend. Das gilt auch, wenn noch andere bekannte Fehlertypen wie Fehlmontage, berücksichtigt werden. Fig. 6 zeigt daher eine Kompensationsanordnung, bei welcher das "integrale" resultierende Gesamtverhalten der Plattform mit Drift und Beschleunigungsmesser-Fehlern in der Umgebung einer Referenztemperatur des stabilisierten Elements durch ein lineares Temperaturmodell beschrieben wird.

Es wird an einem Eingang 174 eine Referenztemperatur vorgegeben, bei welcher der Fehler $\Delta Ty$ der Stellgröße $Ty$ null ist. Es wird angenommen, daß in der Umgebung dieser Referenztemperatur die Fehler linear von der Temperaturabweichung $\Delta \vartheta$ abhängen. Die momentane Temperatur der die Sensoren enthaltenden Baugruppe 124 (Fig. 4) wird an einem Eingang 176 eingegeben. In einem Punkt 178 wird die Differenz $\Delta \vartheta$ von momentaner Temperatur und Referenztemperatur gebildet.

Von dem Beschleunigungsmesser 42 kommt ein Beschleunigungssignal in Form einer über eine Taktperiode gebildeten Summe von Geschwindigkeitsinkrementsignalen

$$\sum_T \Delta v_x .$$

Dieses Beschleunigungssignal liegt an einem Eingang 178 an. Das Beschleunigungssignal wird mit einem Skalenfaktorfehler multipliziert, der mit einem Koeffizienten $SK^*$ proportional der Temperaturabweichung $\Delta \vartheta$ ist. Das ist durch den Block 180 dargestellt. Der Block 180 erhält über Eingang 182 die Temperaturabweichung $\Delta \vartheta$ und an dem Eingang 178 das Beschleunigungssignal. Weiterhin wird ein integraler Achsenfehler für die Ausrichtung um die Koordinatenachse $y^c$ angenommen. Der ingetrale Achsfehler ist ein resultierender Fehler der gesamten Meßstrecke für das Eingangssignal der Ausrichtgleichungen und enthält Anteile durch Kreiseldrift, Servokreis und Ausleseelektronik sowie Beschleunigungsmesser-Fehler. Dieser Achsfehler wird angenommen als proportional zu der Temperaturabweichung $\Delta\vartheta$ mit einem Proportionalitätsfaktor B*. Der Proportionalitätsfaktor B* ist in Fig. 6 dargestellt durch einen Block 184, auf welchen über einen "Eingang" 186 die Temperaturabweichung $\Delta\vartheta$ eingegeben, und an dessen "Ausgang 188 der Achsfehler B*$\Delta\vartheta$ ausgegeben wird. Dieser integrale Achsfehler wird in einem Punkt 190 dem mit dem Skalenfaktorfehler multiplizierten Beschleunigungssignal überlagert. Es ergibt sich ein Beschleunigungsfehler

$$\Delta\left(\sum_T \Delta V_x\right) \quad .$$

Dieser wird den Operationen unterworfen, denen entsprechend Fig. 3 das Beschleunigungssignal $a^c_x$ unterworfen ist. Das ist in Fig. 6 durch einen Block 192 "Ausricht-Gleichungen" dargestellt. Damit ergibt sich ein Fehler der Stellgröße. Nun hat aber auch der Kreisel 28 einen Skalenfaktorfehler. Dieser Skalenfaktorfehler wird auch als proportional zu der Temperaturabweichung $\Delta\vartheta$ angenommen mit einem Proportionalitätsfaktor SF*. Mit diesem Skalenfaktorfehler wird der Fehler des Stellsignals, der vom Block 192 geliefert wird, noch multipliziert. Das ist durch den Block 194 dargestellt. Dieser Block 194 erhält an einem "Eingang" 196 die Temperaturabweichung $\Delta\vartheta$. Durch die Multiplikation ergibt sich ein Korrektursignal $\Delta Ty$, das der Stellgröße Ty am Drehmomenterzeuger 44 überlagert wird.

Die Konstanten SF*, B* und SK* dieses linearen Temperaturmodells werden für die komplett montierte und betriebene Plattform 10 in entsprechenden Temperaturversuchen ermittelt und sind im Rechner abgespeichert. Mit Hilfe dieses Temperaturmodells können Plattformfehler kompensiert werden, welche durch Abweichungen zwischen Isttemperatur und Referenztemperatur determiniert sind und sich auf die Eingangssignale und die Ausgangssignale der Ausricht-Gleichungen auswirken.

Im stationären Zustand ist die Temperaturabweichung null. Damit verschwinden auch die Korrekturtherme.

Durch die vorstehend beschriebenen Maßnahmen zur Fehlerkompensation sollen möglichst alle die Ausrichtgenauigkeit beeinflussenden deterministischen Fehler kompensiert werden. Es können sich dann lediglich noch zufällige Fehler auswirken. Solche zufälligen Fehler sind u.a.

Plattformfehler, die sich während des jeweils laufenden Ausrichtvorganges zufällig ändern (Rauschen). Zufällige Fehler sind weiterhin solche Plattformfehler, die sich von Einschalten zu Einschalten zufällig ändern und nach dem Einschalten zwar unbekannt aber konstant sind. Beispielsweise führt eine konstante aber unbekannte Änderung $d^c_y$ der Drift um die Koordinatenachse $y^c$ der Plattform 10 bekanntermaßen zu einem Ausrichtfehler im Azimut von

$$(16) \qquad \theta_z = \frac{d^c_y}{\Omega_E \cos\phi}$$

wobei $\Omega_E$ die Erddrehung und $\phi$ die geographische Breite ist.

Um eine Ausrichtgenauigkeit von 1 Milliradiant (1 m rad) zu erreichen, darf $d_y^c$ einen Wert von 0,01 °/h nicht überschreiten.

Um unzulässig hohe Driftwerte der vorstehend geschilderten Art auszuschalten, wird die Plattform 10 in der oben beschriebenen Weise einmal nach Nord und einmal nach Süd ausgerichtet.

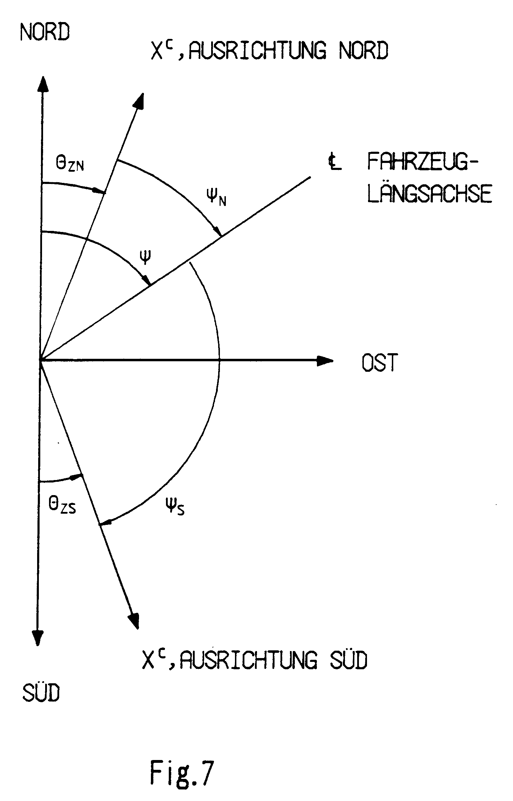

Durch einen von Einschalten zu Einschalten auftretenden Driftfehler ergibt sich bei der Ausrichtung nach Nord ein Ausrichtfehler $\theta_{ZN}$. Die Koordinatenachse $x^c$ weicht um diesen Winkel $\theta_{ZN}$ von der Nordrichtung ab. Das ist in Fig. 7 übertrieben dargestellt. Die um den Kardanfehler bereinigte Kursanzeige der Plattform 10 beträgt damit am Ende der Ausrichtung nach Nord

$$(17) \qquad \psi_N = \psi - \theta_{ZN}.$$

Darin ist $\psi_N$ der Winkel zwischen der Fahrzeuglängsachse (oder einer sonstigen Referenzrichtung) und der Koordinatenachse $x^c$ des Plattformsystems, $\psi$ der Winkel zwischen Fahrzeuglängsachse und Nord. Bei einer Ausrichtung der Plattform 10 nach Süd ergibt sich der Ausrichtfehler $\theta_{ZS}$. Die wiederum um Kardanfehler bereinigte Anzeige des Kurswinkels wird, wie aus Fig. 7 abgelesen werden kann,

$$(18) \qquad \psi_S = 180° - \psi - \theta_{ZS}.$$

Gesucht wird der Winkel $\psi$, nämlich der Winkel zwischen der Fahrzeuglängsachse und Nord. Durch Subtraktion der Gleichung (18) von Gleichung (17) ergibt sich

$$(19) \qquad 2\psi = \psi_N - \psi_S + 180° + \frac{1}{\Omega_E \cos\phi}(d^c_{yN} - d^c_{yS}).$$

Wenn man annimmt, daß die Drift bei Ausrichtung nach Nord gleich ist der Drift bei Ausrichtung nach Süd, fällt der letzte Term weg. Die Nordrichtung läßt sich dann bestimmen aus

$$(20) \qquad \psi = \frac{1}{2}[\psi_N - \psi_S + 180°].$$

Besteht zwischen den Driftwerten in den beiden Ausrichtpositionen eine Differenz

$$(21) \qquad \Delta dy = d^c_{yN} - d^c_{yS},$$

so ergibt sich ein Fehler in der Bestimmung der Nordrichtung von

$$(22) \qquad \Delta\psi = \frac{\Delta d_y}{\Omega_E \cos\phi}.$$

Im Vergleich mit Gleichung (16) zeigt sich der Vorteil, daß der Fehler in der Bestimmung der Nordrichtung nicht mehr durch die Driftänderung $d^c_y$ von Einschalten zu Einschalten, sondern nur noch durch die allfälligen Differenzen zwischen den Driften in den beiden Ausrichtpositionen Nord und Süd bestimmt wird. Solche Differenzen können durch zufällige langsame Änderungen der Drift entstehen.

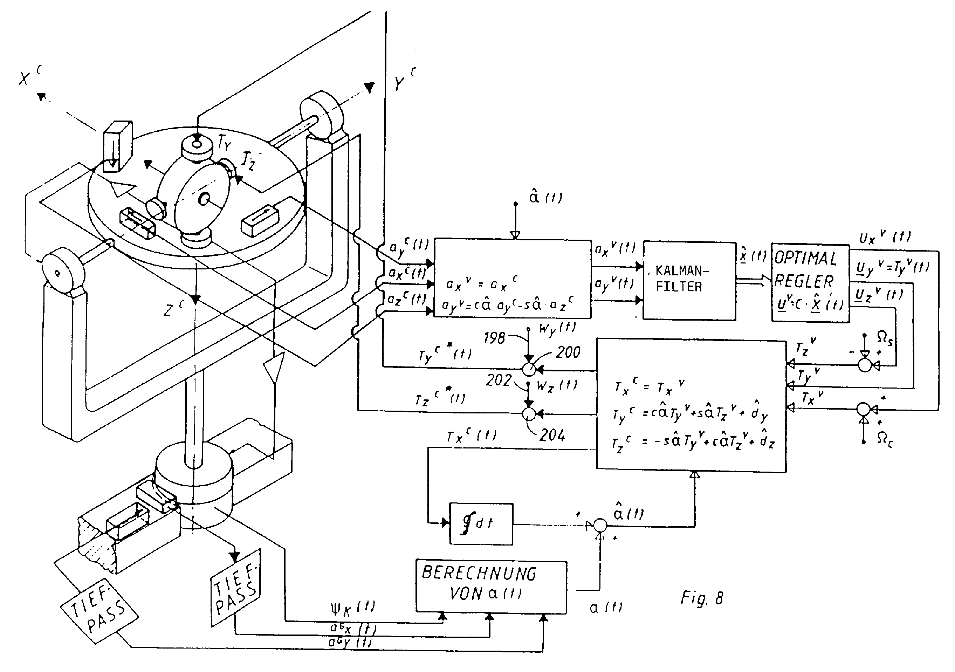

Eine weitere Maßnahme zur Identifizierung und Reduzierung der Auswirkungen der Driften des Kreisels 28 besteht darin, die Plattform 10 um die Koordinatenachsen $y^c$ und $z^c$ in definierter Weise zu bewegen. Das ist in Fig. 8 dargestellt.

Fig. 8 entspricht weitgehend der Fig. 3, und entsprechende Teile sind mit den gleichen Bezugzeichen versehen wie dort. Bei der Kreiselanordnung nach Fig. 8 werden den stellgrößen $T_y^c(t)$ und $T_z^c(t)$, die von den Transformationsmitteln 112 geliefert werden zeitabhängige Signale $w_y(t)$ und $w_z(t)$ überlagert. Das zeitabhängige Signal $w_y(t)$ liegt an einem Eingang 198 an. Das Signal $w_y(t)$ wird in einem Punkt 200 der Stellgröße $T_y^c(t)$ überlagert. Daraus ergibt sich eine kombinierte Stellgröße

$$(23) \qquad T^c_y(t)^* = T_y^c(t) + w_y(t).$$

Das zeitabhängige Signal $w_z(t)$ liegt an einem Eingang 202 an. Das Signal $w_z(t)$ wird in einem Punkt 204 der Stellgröße $T_z^c(t)$ überlagert. Daraus ergibt sich eine kombinierte Stellgröße

$$(24) \qquad T^c_z(t)^* = T^c_z(t) + w_z(t).$$

Die zusätzlichen Signale $w_y(t)$ und $w_z(t)$ bewirken eine definierte Zusatzbewegung des Kreisels 28. Aus dieser Zusatzbewegung und den dabei erhaltenen Signalanteilen kann die Drift $d_y^c$ des Kreisels 28 identifiziert werden. Die zusätzlichen Signale werden dabei so gewählt, daß einerseits eine Identifizierung der Drift möglich ist, andererseits durch die dadurch hervorgerufenen Zusatzbewegungen des Kreisels 28 während des Ausrichtvorganges die Ausrichtgenauigkeit praktisch nicht beeinflußt wird. Durch die Identifikation der Drift $d_y^c$ wird eine wesentliche Verbesserung der Ausrichtgenauigkeit gegenüber einer Ausrichtung ohne solche "Identifikations"-Zusatzbewegung erreicht.

Als Zusatzsignale haben sich Signale von der Form

$$(25) \qquad w_y(t) = \sin(\hat{\alpha})\, \Omega_z$$
$$w_z(t) = \cos(\hat{\alpha})\, \Omega_z$$

als zweckmäßig erweisen, wobei $\Omega_Z$ eine speziell - von Fall zu Fall unterschiedlich - vorgebbare Drehgeschwindigkeit ist.

## Patentansprüche

1.  Autonom ausrichtbare Kreiselanordnung, enthaltend
    - eine zweiachsige Plattform (10) mit einem stabilisierten Element (24), die durch Stellmotoren (18,23) um zwei Plattformachsen (14,21) ausrichtbar ist,
    - einen zweiachsigen Kreisel (28) mit je einem Abgriff (36,42) und einem Drehmomenterzeuger (40,44) auf jeder Eingangsachse,
    - bei der die Stellmotoren (18,23) von den Signalen der Abgriffe (36,42) gesteuert sind, und
    - bei der an dem stabilisierten Element (24) Neigungsgeber (46,48) vorgesehen sind, aus deren Signalen Stellsignale abgeleitet werden, welche auf die Drehmomenterzeuger (40,42) des Kreisels (28) aufgeschaltet sind,
    **dadurch gekennzeichnet, daß**
    - zur schnellen Ausrichtung der Drallachse in die Nordrichtung die die Neigungswinkel darstellenden Signale der Neigungsgeber (46,48) auf ein Kalmanfilter (54) geschaltet sind, der Schätzwerte für Lagefehler des stabilisierten Elements liefert,
    - die Schätzwerte der Lagefehler auf einen optimalen Regler (56) aufgeschaltet sind, und
    - die Stellsignale des Reglers (56) auf je einen Drehmomenterzeuger (40,44) des Kreisels (28) aufgeschaltet sind.

2.  Kreiselanordnung nach Anspruch 1, **dadurch gekennzeichnet,** daß aus einem Neigungssignal der Neigungsgebermittel (46) Kompensationssignale zur Kompensation des Einflusses der Vertikalkomponente der Erddrehung gebildet und den Stellsignalen des optimalen Reglers (56) überlagert werden.

3. Kreiselanordnung nach Anspruch 2, dadurch gekennzeichnet, daß

(a) die Neigungsgebermittel (46, 48) ein erstes Neigungssignal ($\overline{a}_x^c$) nach Maßgabe der Neigung des stabilisierten Elements (24) um eine der Eingangsachsen des Kreisels (28) liefern und

(b) das Kalmanfilter (54) von diesem ersten Neigungssignal ($\overline{a}_x^c$) beaufschlagt ist.

4. Kreiselanordnung nach Anspruch 3, **dadurch gekennzeichnet,** daß

(a) die Neigungsgebermittel (46, 48) ein zweites Neigungssignal ($\overline{a}_y^c$) nach Maßgabe der Neigung des stabilisierten Elements (24) um die zu den Eingangsachsen (32, 34) senkrechte Drallachse (30) des Kreisels (28) erzeugen und

(b) die Kompensationssignale zur Kompensation des Einflusses der Vertikalkomponente der Erddrehung aus diesem zweiten Neigungssignal ($\overline{a}_y^c$) ableitbar sind.

5. Kreiselanordnung nach Anspruch 4, **dadurch gekennzeichnet,** daß die Neigungssignale von je einem Beschleunigungsmesser (46, 48) mit nachgeschaltetem Tiefpaß (86, 59) erzeugbar sind.

6. Kreiselanordnung nach Anspruch 1, **dadurch gekennzeichnet,** daß

(a) die Neigungsfühlermittel drei Beschleunigungsmesser (46, 48, 100) mit zueinander senkrechten Eingangsachsen aufweisen,

(b) die Signale der drei Beschleunigungsmesser (46, 48, 100) auf erste Transformationsrechenmittel (102) geschaltet sind,

- welchen zusätzlich ein Schätzwert für den Neigungswinkel ($\hat{\alpha}$) des stabilisierten Elements (24) um die zu den beiden Plattformachsen (14, 21) senkrechte, nicht-stabilisierte Achse zugeführt wird und
- welche virtuelle Beschleunigungswerte ($a_x^v$, $a_y^v$) liefert, welche die Neigung einer auch um diese letztere Achse stabilisierten virtuellen Plattform darstellen

(c) die virtuellen Beschleunigungswerte ($a_x^v$, $a_y^v$) auf das Kalmanfilter (104) aufgeschaltet sind, welches Schätzwerte ($\hat{\underline{x}}(t)$) der Lagefehler der virtuellen Plattform liefert

(d) die Schätzwerte ($\hat{\underline{x}}(t)$) der Lagefehler auf einen optimalen Regler (106) aufgeschaltet sind, welcher Stellsignale ($\underline{u}^v$) zur Stabilisierung der virtuellen Plattform liefert und

(e) die Stellsignale ($\underline{u}^v$) zur Stabilisierung der virtuellen Plattform auf zweite Transformationsrechenmittel (112) aufgeschaltet sind

- ebenfalls den besagten Schätzwert ($\hat{\alpha}$) des Neigungswinkel erhalten und
- welche Stellsignale zur Stabilisierung der realen Plattform (10) ($T_y^c$, $Tz^c$) liefern, welche auf die Drehmomenterzeuger (44, 40) des Kreisels (28) aufgeschaltet sind.

7. Kreiselanordnung nach Anspruch 6, **dadurch gekennzeichnet,** daß

(a) an einem die Plattform (10) tragenden Gehäuse (16) in einer zur Achse des äußeren Rahmens (12) der Plattform (10) senkrechten Ebene ein Paar von Neigungssensoren (58, 60) mit zueinander senkrechten Eingangsachsen vorgesehen ist, welche auf die Neigung der besagten Ebene gegen die Horizontale ansprechen und Gehäuse Neigungssignale liefern,

(b) ein Winkelgeber (20) auf der Achse (14) des äußeren Rahmens (12) angeordnet ist und ein die Lage ($\psi$) dieses äußeren Rahmens (12) zum Gehäuse wiedergebendes Winkelsignal liefert und

(c) Neigungswinkel-Rechnermittel (118) vorgesehen sind,

- auf welche die Gehäuse-Neigungssignale und das besagte Winkelsignal aufgeschaltet sind und
- welche einen daraus berechneten Wert ($\alpha(t)$) für den Neigungswinkel des stabilisierten Elements (24) um die nicht- stabilisierte Achse liefern.

8. Kreiselanordnung nach Anspruch 7, **dadurch gekennzeichnet,** daß

(a) ein einer Drehung um die besagte nichtstabilisierte Achse der Plattform (10) entsprechendes Stellsignal ($T_x^c$) von den zweiten Transformationsrechenmitteln (112) auf integrierende Mittel (122) aufgeschaltet ist und

(b) der Ausgang der integrierenden Mittel (122) zu dem besagten berechneten Wert ($\alpha(t)$) für den Neigungswinkel als Korrektur zur Bildung des Schätzwertes ($\hat{\alpha}(t)$) für diesen Neigungswinkel überlagert sind.

13

9. Kreiselanordnung nach Anspruch 7 oder 8, **dadurch gekennzeichnet, daß**

(a) der einer Stellbewegung der virtuellen Plattform um die vertikale Plattformachse entsprechenden Stellgröße ($T_z^v$) des optimalen Reglers (106) ein Signal überlagert ist, welches die Vertikalkomponente ($\Omega_s$) der Erddrehung darstellt und

(b) der eine Stellbewegung der virtuellen Plattform um die nicht- stabilisierte Achse entsprechenden Stellgröße ($T_x^v$) des optimalen Reglers (106) ein Signal überlagert ist, welches die Horizontalkomponente ($\Omega_c$) der Erddrehung darstellt.

10. Kreiselanordnung nach einem der Ansprüche 1 bis 9, **dadurch gekennzeichnet, daß**

(a) die Sensoren (Kreisel und Neigungssensoren) in dem stabilisierten Element (24) in engem thermischen Kontakt in einer Baugruppe (124) miteinander angeordnet sind, so daß sie eine weitestgehend einheitliche Temperatur besitzen,

(b) ein Temperatursensormittel (132, 134, 136) zur Messung dieser einheitlichen Temperatur ($\vartheta$) vorgesehen ist, das ein Temperatursignal liefert,

(c) gemessene, temperaturabhängige Fehlerkoeffizienten in einem Speicher (168) gespeichert sind und

(d) Fehlerrechenmittel (166, 168, 170) vorgesehen sind,
- auf welche Meßgrößen von den Sensoren und Fehlerkoeffizienten aus dem Speicher (168) aufschaltbar sind und
- welche daraus Korrekturen liefern, die an den Signalen des Systems angebracht werden,

11. Kreiselanordnung nach Anspruch 10, **dadurch gekennzeichnet,** daß die Sensoren durch Heizmittel (126, 128, 130) auf eine nahe dem oberen Ende des zulässigen Temperaturbereichs liegende einheitliche Temperatur regelbar sind.

12. Kreiselanordnung nach einem der Ansprüche 1 bis 11, **dadurch gekennzeichnet,** daß zur Identifikation von Fehlern dem stabilisierten Element (24) eine definierte Bewegung erteilt wird

13. Kreiselanordnung nach Anspruch 12, **dadurch gekennzeichnet,** daß zur Erzeugung der definierten Bewegung den auf die beiden Drehmomenterzeuger aufgeschalteten Signalen definierte Zusatzsignale überlagerbar sind.

14. Kreiselanordnung nach einem der Ansprüche 1 bis 11, **dadurch gekennzeichnet,** daß die Plattform (10) nacheinander nach Norden und nach Süden oder umgekehrt ausrichtbar ist, wobei sich die Nordrichtung durch Linearkombination der dabei erhaltenen Azimutwinkel ($\psi_N$, $\psi_S$) ergibt.

**Claims**

1. Autonomously alignable gyro assembly, comprising:
- a two-axis platform (10) with a stabilised element (24), which is arranged to be aligned about two platform axes (14,21) by servomotors (18,23),
- a two-axis gyro (28) with one pick-off (36,42) and one torquer (40,44) on each input axis,
- wherein the servomotors (18,23) are controlled by the signals of the pick-offs (36,42), and
- wherein inclination sensors (46,48) are provided at the stabilised element (24), servo-signals signals being derived from the signals of the inclination sensors and being applied to the torquers (40,42) of the gyro (28),

characterized in that
- for quick alignment of the spin axis with North, the signals from the inclination sensors (46,48) representing the inclination angles are applied to a Kalman filter (54), which provides estimated values of attitude errors of the stabilised element,
- the estimated values of the attitude errors are applied to an optimal controller (56), and
- the servo-signals signals from the controller (56) are applied to a respective one of the torquers (40,44) of the gyro (28).

2. Gyro assembly as claimed in claim 1, characterized in that compensation signals for compensating the influence of the vertical component of the earth's rotation are formed from an inclination signal of the inclination sensor means (46) and are superimposed to the servo-signals of the optimal controller.

3. Gyro assembly as claimed in claim 2, characterized in that

(a) the inclination sensor means (46,48) provide a first inclination signal ( $\tilde{\alpha}_y{}^c$ ) indicative of the inclination of the stabilised element (24) about one of the input axes of the gyro (28), and

(b) this first inclination signal ( $\tilde{\alpha}_y{}^c$ ) is applied to the Kalman filter (54).

4. Gyro assembly as claimed in claim 3, characterized in that

(a) the inclination sensor means (46,48) generate a second inclination signal ( $\tilde{\alpha}_y{}^c$ ) indicative of the inclination of the stabilised element (24) about the spin axis (30) orthogonal to the input axes (32, 34), and
(b) the compesnsation signals for compensation the influence of the vertical component of the earth's rotation are derived from this second inclination singnal ( $\tilde{\alpha}_y{}^c$ ).

5. Gyro assembly as claimed in claim 4, characterized in that the inclination signals are generated by accelerometers (46,48) the output signals of which are applied to low-pass filters (86,59).

6. Gyro assembly as claimed in claim 1, characterized in that
(a) the inclination sensor means comprise three accelerometers (46,48,100) having mutually orthogonal input axes,
(b) the signals of the three accelerometers (46,48,100) are applied to first transformation computing means (102),

- to which, in addition, an estimated value of the inclination angle ( $\tilde{\alpha}$ ) of the stabilised element (24) about the non-stabilised axis orthogonal to the two platform axes (14,21) is applied, and
- which provides virtual acceleration values ($a_x{}^v$, $a_y{}^v$), which represent the inclination of a virtual platform stabilised also about this latter axis,

(c) the virtual acceleration values ($a_x{}^v$, $a_y{}^v$) are applied to the Kalman filter (104), which provides estimated values ($\hat{\underline{x}}$ (t)) of the attitude errors of the virtual platform, and
(d) the estmated values ($\hat{\underline{x}}$(t)) of the attitude errors are applied to an optimal controller (106), which provides servo-signals ($\underline{u}^v$) for stabilising the virtual platform, and
(e) the servor-signals ($\underline{u}^v$) for stabilising the virtual platform are applied to second transformation computing means (112)

- which also receive said estimated value ( $\tilde{\alpha}$ ) of the inclination angle, and
- which provide servo-Signals ($T_y{}^c$, $T_z{}^c$) for stabilising the real platform (10), the servor signals being applied to the torquers (44, 40) of the gyro (28).

7. Gyro assembly as claimed in claim 6, characterized in that
(a) a pair of inclination sensors (58,60) having mutually orthogonal input axes is provided at a housing (16) carrying the platform (10), in a plane normal to the axis of the outer gimbal (12) of the platform, the sensors responding to the inclination of said plane relative to the horizontal and provide housing-inclination signals,
(b) an angle sensor (20) is arranged on the axis (14) of the outer gimbal (12) and provides an angle signal representing the attitude ($\psi$) of this outer gimbal (12) relative to the housing, and
(c) inclination angle computer means (118) are provided
- to which the housing-inclination signals and said angle signal are applied, and

- which provides a value ( $\tilde{\alpha}$ (t)) computed therefrom of the inclination angle of the stabilised element (24) about the non-stabilised axis.

8. Gyro assembly as claimed in claim 7, characterized in that
(a) a srvo-signal($T_x{}^c$) from the second transformation computing means (112) representing a rotation about said non-stabilised axis of the platform (10) is applied to integrating means (122), and
(b) the output of the integrating means (122) is superimposed as correcting quantity to said computed value ($\alpha$(t)) of the inclination value to provid the estimated value ($\hat{\tilde{\alpha}}$(t)) of this inclination value.

9. Gyro assembly as claimed in claim 7 or 8, characterized in that

(a) a signal, which represents the vertical component ($\Omega_s$) of the earth's rotation, is superimposed to the servo-signal ($T_z^v$) of the optimal controller (106) representing an adjusting motion of the virtual platform about the vertical platform axis, and

(b) a signal, which represents the horizontal component ($\Omega_c$) of the earth's rotation, is superimposed to the servo-signal ($T_x^v$) of the optimal controller (106) representing an adjustment motion of the virtual platform about the non-stabilised axis.

10. Gyro assembly as claimed in anyone of the claims 1 to 9, characterized in that

(a) the sensors (gyro and inclination sensors) are arranged in the stabilised element (24) in a unit (124) in close thermal contact with each other, so that they have, to a large extent, uniform temperature,

(b) a temperature sensor means (132, 134, 136) for measuring this uniform temperature ($\vartheta$) is provided, which provides a temperature signal,

(c) measured, temperature-dependent error coefficients are stored in a memory (168), and

(d) error computing means (166, 168, 170) are provided,

- to which measured quantities from the sensors and error coefficients from the memory are applied, and
- which, therefrom, provide correcting quantities, which are applied to the signals of the system.

11. Gyro assembly as claim 10, characterized in that the sensorf are controlled by heating means (126, 128, 130) to assume a temperature lying near the upper end of the permissible temperature range.

12. Gyro assembly as claimed in one of the claims 1 to 11, characterized in that, in order to identify errors, a well defined motion is imparted to the stabilized element (24).

13. Gyro assembly as claimed in claim 12, characterized in that well defined additional signals can be superimposed to the signals applied to the two torquers to generate the well-defined motion.

14. Gyro assembly as claimed in one of the claims 1 to 11, characterized in that the platform (10) is arranged to be aligned consecutively with North and South ar vice versa, the North direction resulting from linear combination of the azimuth angles ($\psi_N$, $\psi_S$) resulting therefrom.

**Revendications**

1. Arrangement gyroscopique susceptible d'être ajusté de façon autonome, comprenant

- une plate-forme biaxiale (10) munie d'un élément stabilisé (24), plate-forme susceptible d'être ajustée par des moteurs de commande (18,23) autour de deux axes de plate-forme (14,21),
- un gyroscope biaxial (28) muni de chaque fois un capteur (36,42) et d'un moteur-couple (40,44) sur chaque axe d'entrée,
- dans lequel les moteurs de commande (18,23) sont commandés par les signaux des capteurs (36,42), et
- dans lequel à l'élément stabilisé (24) des transmetteurs d'inclinaison (46,48) sont prévus, des signaux desquels des signaux de commande appliqués au moteur-couple (40,42) du gyroscope (28) sont déduits,

**caractérisé par le fait que**

- afin d'ajuster rapidement l'axe de spin en direction du nord, les signaux du transmetteur d'inclinaison (46,48) représentant les angles d'inclinaison sont appliqués à un filtre de Kalman (54) qui livre des valeurs estimatives pour des erreurs de position de l'élément stabilisé,
- les valeurs estimatives des erreurs de position sont appliquées à un régulateur optimal (56) et
- les signaux de commande du régulateur (56) sont appliqués à chaque fois un moteur-couple (40,44) du gyroscope (28).

2. Arrangement gyroscopique selon la revendication 1, **caractérisé par le fait que** des signaux de compensation destinés à compenser l'influence de la composante verticale de la rotation de la terre sont formés à partir d'un signal d'inclinaison des moyens transmetteurs d'inclinaison (46) et sont superposés aux signaux de commande du régulateur optimal (56).

**3.** Arrangement gyroscopique selon la revendication 2, **caractérisé par le fait que**

(a) les moyens transmetteurs d'inclinaison (46,48) livrent un premier signal d'inclinaison ($\overline{a}^c_x$) en proportion de l'inclinaison de l'élément stabilisé (24) autour d'un des axes d'entrée du gyroscope (28) et

(b) ce premier signal d'inclinaison ($\overline{a}^c_x$) est appliqué au filtre de Kalman (54).

**4.** Arrangement gyroscopique selon la revendication 3, **caractérisé par le fait que**

(a) les moyens transmetteurs d'inclinaison (46,48) produisent un second signal d'inclinaison ($\overline{a}^c_y$) en proportion de l'inclinaison de l'élément stabilisé (24) autour de l'axe de spin (30) du gyroscope (28), axe vertical par rapport aux axes d'entrée (32,34) et

(b) les signaux de compensation destinés à compenser l'influence de la composante verticale de la rotation de la terre sont susceptibles d'être déduits de ce second signal d'inclinaison ($\overline{a}_y^c$).

**5.** Arrangement gyroscopique selon la revendication 4, **caractérisé par le fait que** les signaux d'inclinaison sont susceptibles d'être produits par chaque fois un accéléromètre (46,48) muni d'un passe-bas (86,59) placé à la suite.

**6.** Arrangement gyroscopique selon la revendication 1, **caractérisé par le fait que**

(a) les moyens capteurs d'inclinaison présentent trois accéléromètres (46,48,100) munis d'axes d'entrée verticaux les uns par rapport aux autres,

(b) les signaux des trois accéléromètres (46,48,100) sont appliqués à des premiers moyens de calcul de transformation (102),

- auxquels en plus une valeur estimative pour l'angle d'inclinaison ($\hat{\alpha}$) de l'élément stabilisé (24) autour de l'axe non stabilisé vertical par rapport aux deux axes de plate-forme (14,21) est amenée et

- lesquels livrent des valeurs virtuelles d'accélération ($a_x^v, a_y^v$) représentant l'inclinaison d'une plate-forme virtuelle stabilisée également autour de ce dernier axe,

(c) les valeurs virtuelles d'accélération ($a_x^v, a_y^v$) sont appliquées au filtre de Kalman (104) qui livre des valeurs estimatives ($\hat{\underline{x}}(t)$) des erreurs de position de la plate-forme virtuelle,

(d) les valeurs estimatives ($\hat{\underline{x}}(t)$) des erreurs de position sont appliquées à un régulateur optimal (106) lequel livre des signaux de commande ($\underline{u}^v$) destinés à stabiliser la plate-forme virtuelle et

(e) les signaux de commande ($\underline{u}^v$) destinés à stabiliser la plate-forme virtuelle sont appliqués aux seconds moyens de calcul de transformation (112),

- lesquels reçoivent également la valeur estimative mentionnée ($\hat{\alpha}$) de l'angle d'inclinaison et

- lesquels livrent des signaux de commande ($T_y^c, T_z^c$) destinés à stabiliser la plate-forme réelle (10) et appliqués au moteur-couple (44,40) du gyroscope (28).

**7.** Arrangement gyroscopique selon la revendication 6, **caractérisé par le fait que**

(a) à un boîtier (16) portant la plate-forme (10) dans un plan vertical par rapport à l'axe du châssis extérieur (12) de la plate-forme (10) est prévue une paire de capteurs d'inclinaison (58,60) munis d'axes d'entrée verticaux les uns par rapport aux autres, capteurs réagissant à l'inclinaison du plan mentionné par rapport à l'horizontale et livrant des signaux d'inclinaison de boîtier,

(b) un capteur angulaire (20) est disposé sur l'axe (14) du châssis extérieur (12) et livre un signal angulaire rapportant la position ($\psi$) de ce châssis extérieur au boîtier et

(c) des moyens calculateurs d'angle d'inclinaison (118) sont prévus,

- auxquels sont appliqués les signaux d'inclinaison de boîtier et le signal d'inclinaison mentionné et

- lesquels livrent une valeur calculée ($\alpha(t)$) à partir de là pour l'angle d'inclinaison de l'élément stabilisé (24) autour de l'axe non stabilisé.

**8.** Arrangement gyroscopique selon la revendication 7, **caractérisé par le fait que**

(a) un signal de commande ($T_x^c$) correspondant à une rotation autour de l'axe non stabilisé mentionné de la plate-forme (10) est appliqué par les seconds moyens de calcul de transformation (112) à des moyens intégrateurs (122) et

(b) la sortie des moyens intégrateurs (122) est superposée à la valeur calculée mentionnée ($\alpha(t)$) pour l'angle d'inclinaison en tant que correction destinée à former la valeur estimative ($\hat{\alpha}(t)$) pour cet angle d'inclinaison.

**9.** Arrangement gyroscopique selon la revendication 7 ou 8, **caractérisé par le fait que**

(a) un signal, représentant la composante verticale ($\Omega_s$) de la rotation de la terre, est superposé à la variable réglante ($T_z{}^v$) du régulateur optimal (106) correspondant au réglage de la plate-forme virtuelle autour de l'axe vertical de plate-forme et

(b) un signal, représentant la composante horizontale ($\Omega_c$) de la rotation de la terre, est superposé à la variable réglante ($T_x{}^v$) du régulateur optimal (106) correspondant à un réglage de la plate-forme virtuelle autour de l'axe non stabilisé.

10. Arrangement gyroscopique selon l'une des revendications 1 à 9, **caractérisé par le fait que**

(a) les capteurs (gyroscope et capteurs d'inclinaison) dans l'élément stabilisé (24) sont disposés les uns avec les autres en contact thermique étroit dans un sous-groupe (124) si bien qu'ils possèdent une température le plus largement unitaire,

(b) un moyen capteur de température (132,134, 136) livrant un signal de température et destiné à mesurer cette température unitaire ($\vartheta$) est prévu,

(c) des coefficients d'erreur mesurés et dépendants de la température sont mémorisés dans une mémoire (168) et

(d) des moyens de calcul d'erreur (166,168,170) sont prévus,

- auxquels des variables mesurées des capteurs et des coefficients d'erreur de la mémoire sont susceptibles d'être appliqués et
- lesquels livrent à partir de là des corrections appliquées aux signaux du système.

11. Arrangement gyroscopique selon la revendication 10, **caractérisé par le fait que** les capteurs sont susceptibles d'être réglés par des moyens de chauffage (126,128,130) sur une température unitaire se trouvant près de l'extrémité supérieure du domaine de température autorisé.

12. Arrangement gyroscopique selon l'une des revendications 1 à 11, **caractérisé par le fait qu'**afin d'identifier des erreurs un mouvement défini est donné à l'élément stabilisé (24).

13. Arrangement gyroscopique selon la revendication 12, **caractérisé par le fait qu'**afin de produire le mouvement défini des signaux suplémentaires définis sont susceptibles d'être superposés aux signaux appliqués aux deux moteurs-couple.

14. Arrangement gyroscopique selon l'une des revendications 1 à 11, **caractérisé par le fait que** la plate-forme (10) est susceptible d'être ajustée successivement vers le nord et vers le sud ou inversement, la direction du nord résultant de la combinaison linéaire des angles azimutaux ($\psi_N$, $\psi_S$) obtenus à cette occasion.

OPTIMAL REGLER

KALMAN-FILTER

Fig.1

Fig.2

EP 0 411 565 B1

$P_n(-)$

$\boxed{1/\bar{T}}$ —64

$P_{n-1}(-)$

$P_n(-)=\phi_{n,n-1}\,P_{n-1}(-)\,\phi_{n,n-1}^T + Q_{n-1}$ —66    $P_n(-)=(1-K_n H_n)P_n(-)$ —62

$P_n(-)$

$K_n = P_n(-)H_n^T(H_n P_n(-)H_n^T + R_n)^{-1}$ —68

$K_n$

—70    $\hat{\underline{X}}_n = \begin{bmatrix}\hat{\theta}_{y,n}\\ \vdots \\ \hat{\theta}_{z,n}\end{bmatrix}$

$\bar{a}_{X^c}$    $Z_n$

$\boxed{K_n}$

63    KALMAN-FILTER

—54

$T_Y\cdot REG$ —76    78 $T_{y,n}-$    $(\sin\alpha_n\,\Omega_s - \hat{d}_y)$

74 $+U_{y,n}$    $\underline{U}_n$    —56

OPTIMALER REGLER

$-\psi^{-1}(T)\cdot\phi(T)$

$T_Z\cdot REG$ —82    84 $T_{z,n}-$    $(\cos\alpha_n\,\Omega_s - \hat{d}_z)$

$+U_{z,n}$    —72

$\bar{a}_y^c$ 88    $\bar{a}_{y,n}^c$    80  90    94    $\sin\alpha_n$    —96    $\cos\alpha_n$

92    98

$-$    $\boxed{\dfrac{1}{g}}$    $\boxed{\sqrt{1-\sin^2\alpha_n}}$

$+\hat{b}$

Fig. 3

Fig. 4

Fig.5

Fig.6

NORD

X$^c$,AUSRICHTUNG NORD

$\theta_{ZN}$

$\ell$ FAHRZEUG-
LÄNGSACHSE

$\psi_N$

$\psi$

OST

$\theta_{ZS}$

$\psi_S$

X$^c$,AUSRICHTUNG SÜD

SÜD

Fig.7

Fig. 8